**Europäisches Patentamt**

**European Patent Office**

**Office européen des brevets**

(19)

(11) Veröffentlichungsnummer : **0 214 500 B1**

(12) # EUROPÄISCHE PATENTSCHRIFT

(45) Veröffentlichungstag der Patentschrift :
**05.06.91 Patentblatt 91/23**

(51) Int. Cl.$^5$ : **G01B 7/34**

(21) Anmeldenummer : **86111323.1**

(22) Anmeldetag : **16.08.86**

(54) **Oberflächenprüfeinrichtung.**

Die Akte enthält technische Angaben, die nach
dem Eingang der Anmeldung eingereicht
wurden und die nicht in dieser Patentschrift
enthalten sind.

(30) Priorität : **13.09.85 DE 3532654**

(43) Veröffentlichungstag der Anmeldung :
**18.03.87 Patentblatt 87/12**

(45) Bekanntmachung des Hinweises auf die
Patenterteilung :
**05.06.91 Patentblatt 91/23**

(84) Benannte Vertragsstaaten :
**AT BE FR GB IT SE**

(56) Entgegenhaltungen :
**EP-A- 0 207 338**
**DE-B- 2 458 606**
**DE-C- 923 747**
**GB-A- 711 237**
**GB-A- 2 084 735**

(73) Patentinhaber : **THYSSEN INDUSTRIE AG**
**Am Thyssenhaus 1**
**W-4300 Essen 1 (DE)**

(72) Erfinder : **Kreiskorte, Heinz, Dr.-Ing.**
**Limbecker Postweg 33**
**W-4600 Dortmund 30 (DE)**

(74) Vertreter : **Freiherr von Schorlemer, Reinfried,**
**Dipl.-Phys.**
**Patentanwalt Brüder-Grimm-Platz 4**
**W-3500 Kassel (DE)**

## Beschreibung

Die Erfindung betrifft eine Oberflächenprüfeinrichtung mit einem einen Oberflächensensor tragenden Sensorhalter und einer diesen abstützenden Führungsschiene, mittels derer der Sensorhalter längs einer vorgewählten Bewegungsbahn über einer zu prüfenden Oberfläche bewegbar ist.

Bei einer Oberflächenprüfeinrichtung nach einem eigenen älteren Vorschlag derselben Anmelderin (EP-A-0 207 338) kann die Oberfläche z.B. einer Flachstahlbramme, die mittels eines Sensors auf Risse oder andere Fehler abgetastet werden soll, durch mehrere Geraden nachgebildet werden, um bei der üblichen Hin- und Herbewegung des Sensors einen annähernd gleichen Abstand zwischen dem Sensor und der Oberfläche zu erreichen Dies ist notwendig, weil die Ausgangssignale der zur Oberflächenprüfung verwendbaren Sensoren von deren Abstand zur Oberfläche abhängig sind und daher nur ein über die Oberfläche im wesentlichen konstanter Sensorabstand eine einfache Auswertung der Sensorsignale ermöglicht.

Es gibt Fälle, in denen die Nachbildung der Oberfläche durch eine Anzahl von Geraden nicht mehr ausreicht. Bei einer bekannten Oberflächenprüfeinrichtung dieser Art (DE-OS 33 24 444) ist daher ein Sensorhalter vorgesehen, der auf einer Kreisbahn um einen zylindrischen Prüfkörper rotiert. Zur Sicherstellung eines konstanten Abstands zwischen dem Sensorhalter und der zu prüfenden Oberfläche des Prüfkörpers kann eine den Sensorhalter tragende Rotationstrommel mittels eines Regelsystems in zwei Richtungen derart eingestellt werden, daß sie koaxial mit dem Prüfkörper angeordnet ist. Eine derartige Regelung ist allerdings nur dann sinnvoll, wenn die Oberfläche des Prüfkörpers tatsächlich zylindrisch ist. Weicht die Oberfläche dagegen von der Zylinderform ab, dann müßte bei jeder Umdrehung der Rotationstrommel an einer Vielzahl von Stellen eine Regelung vorgenommen werden, was bei den erwünschten hohen Drehzahlen aus praktischen Gründen unmöglich ist.

Zur Vermeidung dieses Nachteils weist die bekannte Vorrichtung einen mittels eins Luftsystems auf der zu prüfenden Oberläche abgestützten Sensorhalter auf, um mit Hilfe des Lufdrucks örtliche Abstandsschwankungen ausgleichen zu können. Ein derartiges Luftsystem ist jedoch nachteilig, wenn es sich bei den Prüfkörpers beispielsweise um aus einer Stranggußanlage auslaufende Stahlbrammen handelt, die zur Zeit der Oberflächenprüfung eine Temperatur von z.B. 800 bis 1000°C und/oder eine rauhe Oberfläche aufweisen. Dies würde nämlich zur Folge haben, daß sich der vom Luftsystem erzeugte Druck nur unregelmäßig aufbaut und eine Konstanthaltung des Abstands zwischen Prüfkörper und Sensorhalter nicht ausreichend genau durchführbar ist. Außerdem würde das bekannte Luftsystem eine zusätzliche Regelung mittels des zusätzlich vorhandenen Regelsystems unmöglich machen. Schließlich wäre eine analoge Anwendung der bekannten Oberflächenprüfeinrichtung auf Prüfkörper mit anderen, im wesentlichen ebenen Oberflächen, z.B. Flachstahlbrammen, wenig sinnvoll, da mittels des Regelsystems nur der mittlere Abstand zwischen dem Sensorhalter und der Oberfläche auf einen konstanten Wert geregelt werden könnte und die verbleibenden maximalen Abweichungen von diesem Mittelwert zu groß sein würden. Erst recht gilt dies für Prüfkörper, die wie Flachstahlbrammen eine wellige Oberfläche aufweisen, deren Kontur sich allmählich ändern kann. Entsprechende Probleme würden sich bei Anwendung von Regelkreisen mit solchen Luftsystemen ergeben, wie sie beispielsweise bei der Dickenmessung von auf Oberflächen aufgebrachten Schichten verwendet werden (GB-A-2 084 735).

Bei Walzenwölbungsmessern ist es bekannt, die Laufschiene des Sensorhalters für den die Wölbung messenden Sensor mittels verstellbarer Verbindungselemente an einer Tragkonstruktion zu montieren, um dadurch eine exakte Geradstellung der Laufschiene zu ermöglichen (DE-C923 747). Mit einer derartigen Einrichtung ist es theoretisch möglich, den Sensorhalter auf wählbaren Bewegungsbahnen über die Oberfläche der Walze zu führen. Da für die Wölbungsmessung jedoch eine exakte Geradstellung der Laufschiene erforderlich ist und diese daher aus einem möglichst biegesteifen Material hergestellt werden muß, ist mit dieser bekannten Einrichtung eine Anpassung der Laufschiene an beliebige Konturen der Walzenoberfläche weder möglich noch beabsichtigt.

Der Erfindung liegt die Aufgabe zugrunde, die Oberflächenprüfeinrichtung der eingangs bezeichneten Gattung dahingehend zu verbessern, daß eine unmittelbare Abstandsregelung des Sensorhalters selbst nicht erforderlich ist und auch heiße, rauhe Oberflächen problemlos untersucht werden können.

Zur Lösung dieser Aufgabe ist die Erfindung dadurch gekennzeichnet, daß die Führungsschiene eine entsprechend der Kontur der zu prüfenden Oberfläche verformbare Führungsschiene ist, deren Abstand von der Oberfläche an mehreren Stellen mittels je einer Einstellvorrichtung, der ein am Sensorhalter vorgesehener Abstandsensor zugeordnet ist, auf einem vorgewählten Wert gehalten wird.

Die Erfindung bringt den Vorteil mit sich, daß sie der Kontur der zu prüfenden Oberfläche nachgeformt werden kann und dadurch eine Bewegung des Sensorhalters mit im wesentlichen konstantem Abstand zu dieser Oberfläche ermöglicht. Unter der Voraussetzung, daß sich die Oberflächenkontur des Prüfkörpers in der Bewegungsrichtung des Sensorhalters nicht ändert, genügt eine einmalige Nachbildung dieser Oberfläche mittels der Führungsfläche, da der Sensorhalter bei jeder Hin- und Herbewegung durch die Führungsfläche geführt und von dieser in einem vorgewählten Abstand von der Prüfoberfläche gehalten wird. Auch örtliche Schwankungen in Richtung der Hin- und Herbewegung sind unschädlich, sobald diese einmal erfaßt und die Führungsfläche entsprechend eingestellt ist. Unter der weiteren Voraussetzung schließlich, daß sich die Oberflächenkontur in Längsrichtung des geförderten Prüfkörpers allmählich ändert, ist lediglich erforderlich, die Führungsfläche entsprechend allmählich nachzubilden. Dies ist mit Hilfe einfach aufgebauter Regelvorrichtungen problemlos möglich. Die beanspruchte Oberflächenprüfeinrichtung entspricht daher allen wesentlichen Voraussetzungen, die in der Praxis zu erwarten sind.

Weitere vorteilhafte Merkmale der Erfindung ergeben sich aus den abhängigen Ansprüchen.

Ein Ausführungsbeispiel der Erfindung geht aus den Abbildungen hervor. Es zeigen :

Fig. 1 schematisch eine Oberflächenprüfeinrichtung von der Seite gesehen ;

Fig. 2 die Oberflächenprüfeinrichtung nach Fig. 1 in der Richtung eines Pfeils X ;

Fig. 3 die Oberflächenprüfeinrichtung nach Fig. 1 in Richtung eines Pfeils Y ;

Fig. 4 ein Resonanz-Antriebssystem für die Oberflächenprüfeinrichtung nach Fig. 1 bis 3 ;

Fig. 5 ein Stützquellenlager für die Oberflächenprüfeinrichtung nach Fig. 1 bis 3 ;

Fig. 6 und 7 einen Quer- und Längsschnitt durch eine pneumostatische Lagerung für das Resonanz-Antriebssystem nach Fig. 4 ; und

Fig. 8 einen Querschnitt durch eine bevorzugte Ausführungsform der Oberflächenprüfeinrichtung nach Fig. 1 bis 3.

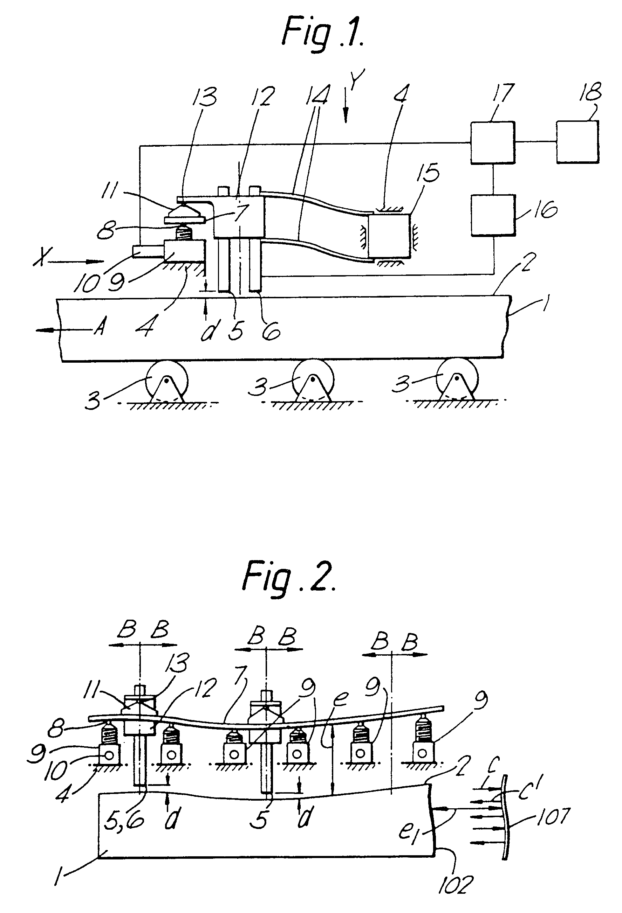

Gemäß Fig. 1 wird ein Prüfkörper 1 kontinuierlich in Pfeilrichtung A über einen Rollgang 3 gefördert. An diesem Prüfkörper 1 soll eine Oberfläche 2 auf Risse untersucht werden. Zum Erkennen der Risse wird im Abstand d über der Oberfläche 2 ein Rißsensor 5 angeordnet, der seine Meßwerte an eine nicht dargestellte Meßwertverarbeitungsanlage gibt. Der Rißsensor 5 ist in einem Sensorhalter 12 befestigt, der über zwei parallele, vorgespannte Blattfedern 14 nach unten gedrückt wird. Die Blattfedern 14 sind nach Art eines Parallelführungssystems für den Sensorhalter 12 angeordnet. Der Sensorhalter 12, der mit Hilfe der Blattfedern 14 nach unten gedrückt wird, stützt sich über ein Gelenk 13 und ein Gleitstück 11 auf einer oberen Führungsfläche einer Führungsschiene 7 ab.

Die Blattfedern 14 sind an einem Antriebsbalken 15 befestigt, der senkrecht zur Bildebene der Fig. 1 hin- und herbewegt wird. Der Antriebsbalken 15 ist in einem Gehäuse 4 gelagert, das durch schraffierte Flächen dargestellt ist.

Während der Hin- und Herbewegung des Antriebsbalkens 15 gleitet das Gleitstück 11 auf der Führungsfläche der Gleitschienen 7 hin und her. Damit dabei der Rißsensor 5 in einem konstanten Abstand d zur Oberfläche 2 gehalten wird, was für die Funktion des Rißsensors 5 wichtig ist, wird die Kontur der Führungsfläche 7 erfindungsgemäß der Kontur der Oberfläche 2 nachgeformt.

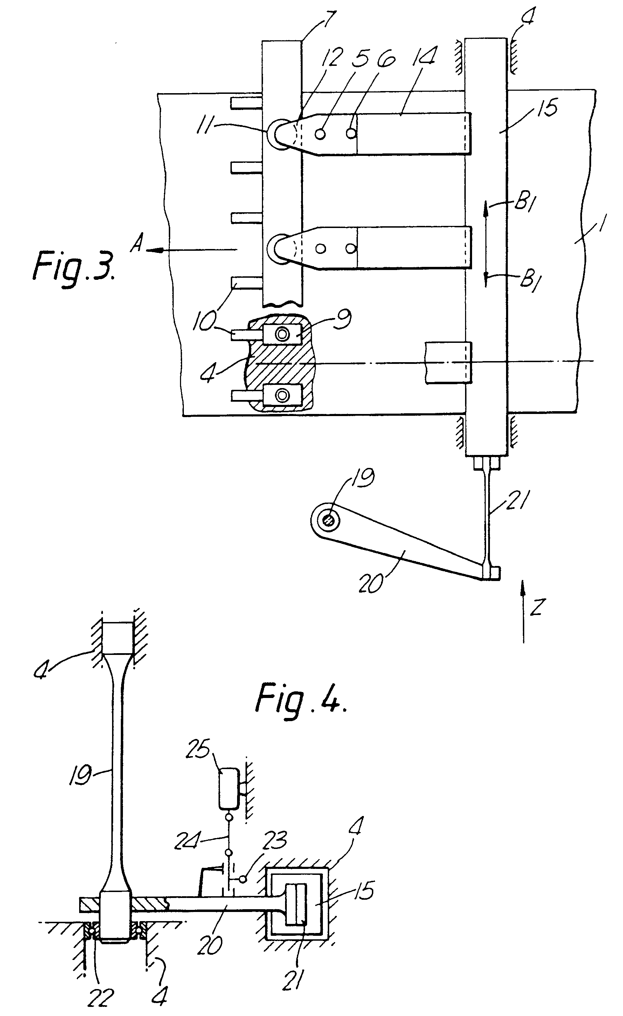

Zu diesem Zweck ist die Führungsschiene 7 als biegbarer, vorzugsweise elastisch biegbarer Balken ausgebildet und gemäß Fig. 2 vorzugsweise an einer Mehrzahl von Lagerstellen 8 auf einer entsprechenden Mehrzahl von Stellgliedern abgestützt, die z.B. aus am Gehäuse 4 befestigten Hubgetrieben 9 bestehen, die mit je einer Antriebseinrichtung 10, z.B. je einem steuerbaren Elektromotor, verbunden sind. Mit Hilfe dieser Hubgetriebe 9 kann die Führungsschiene 7 an jeder Lagerstelle 8 in der Höhe verstellt werden.

Die Oberfläche 2 kann sich, wie in Fig. 2 angedeutet ist, in Richtung der Hin- und Herbewegung des Sensorhalters 12 und auch in Richtung der Förderung (Pfeil A in Fig. 1) des Prüfkörpers 1 allmählich ändern. Im Sensorhalter 12 ist daher zusätzlich ein Abstandsensor 6 untergebracht, dessen Abstand zur Oberfläche 2 während der Hin- und Herbewegung des sensorhalters 12 immer dann gemessen wird, wenn er eine der Lagerstellen 8 passiert. Der Abstandsensor 6 kann wie der Rißsensor 5 aus einem induktiven oder mit Wirbelströmen arbeitenden Sensor bestehen. Derartige Sensoren sind allgemein bekannt (DE-OS'en 20 44 331, 27 46 618 und 33 24 444 oder US-PS 4,258,319).

Die vom Abstandsensor 6 abgegebenen Signale werden einem Meßwertumwandler 16 zugeführt und in diesem in elektrische Signale umgewandelt, die zum Abstand des Abstandsensors 6 von der Oberfläche 2 proportional sind und die Istwerte dieses Abstands darstellen. Diese Istwerte werden einer Mehrzahl von Regelverstärkern 17 zugeführt, die mit je einer der Antriebseinrichtungen 10 verbunden sind, und in diesen mit Sollwerten verglichen, die in mit den Regelverstärkern 17 verbundenen Sollwertgebern 18 gespeichert sind. Weichen die Istwerte von den Sollwerten ab, so wird mit Hilfe der Antriebseinrichtungen 10 und der Hubgetriebe 9 die Führungsschiene 7 im Bereich der zugehörigen Lagerstelle 8 so lange in der Höhe verstellt, bis die Istwerte und Sollwerte gleich sind und die Abstände des Abstandsensors 6 von der Oberfläche 2 beim Passieren der Lagerstellen 8 jeweils einen dem jeweiligen Sollwert entsprechenden Wert besitzen. Sind alle Sollwerte für den Abstand gleich, so hat dies zur Folge, daß die Führungsschiene 7 bzw. deren Führungsfläche im Bereich aller Lagerstellen 8 denselben Abstand von der Oberfläche 2 und daher auch dieselbe Kontur wie diese hat. Da der Abstandsensor 6 wie auch der Rißsensor 5 am Sensorhalter 12 befestigt ist und dieser auf der Führungsschiene 7 gleitet, hat auch der Rißsensor 5 während des gesamten Bewegungshubes einen konstanten Abstand von der Oberfläche 2.

Gemäß Fig. 2 und 3 kann vorgesehen sein, auf der Führungsschiene 7, die sich quer über die Breite des Prüfkörpers 1 erstreckt, mehrere Sensorhalter 12 abzustützen, die jeweils nur über einen kleinen Abschnitt der Breite des Prüfkörpers 1 hin- und herbewegt werden. In diesem Fall ist jeder Sensorhalter 12 mit je einem Rißsensor 5 und je einem Abstandsensor 6 versehen und außerdem jedem Sensorhalter 12 je eine Kombination der Teile 8, 9, 10, 13 und 14 zugeordnet, wobei alle Paare von Blattfedern 14 an demselben Antriebsbalken 15 befestigt sein können. Ferner kann vorgesehen sein, den Hub der Hin- und Herbewegung des Antriebsbalkens 15 so zu wählen, daß jeder Sensorhalter 12 bzw. Abstandsensor 6 bei seiner Hin- und Herbewegung nur eine oder zwei Lagerstellen 8 bzw. eine bestimmte Anzahl aller vorhandenen Lagerstellen 8 passiert. Für diesen Fall würden mit jedem Abstandsensor 6 nur die Lagepositionen der von ihm passierten Lagerstellen 8 ermittelt bzw. geregelt, wozu jedem Abstandsensor 6 oder jeder Lagerstelle 8 je ein Regelverstärker 17 mit Meßwertumwandler 16 und Sollwertgeber 18 zugeordnet werden kann.

Bei der beschriebenen Art der Regelung wird eine Abstandregelung nur an den Lagerstellen 8 durchgeführt, so daß zwischen den Lagerstellen 8, bedingt durch die Feinstruktur der Oberfläche 2, gewisse Abweichungen des Abstands zwischen Rißsensor 5 und Oberfläche 2 vom gewünschten Sollwert auftreten können.

Alternativ wäre es auch möglich, die Abstands- Istwerte kontinuierlich während der gesamten Dauer der Hin- und Herbewegung der Abstandsensoren 6 zu ermitteln und auf diese Weise ein Abstandsprofil der Oberfläche 2 zu gewinnen. Aus diesem Abstandsprofil könnten dann mit Hilfe einer Datenverarbeitungsanlage die günstigsten Positionen aller Lagerstellen 8 durch eine Optimierungsrechnung bestimmt werden. Diese Optimierungsrechnung kann so gestaltet werden, daß zwischen der Biegelinie der Führungsschiene 7 und der Oberfläche 2 die geringste Abweichung erreicht wird.

In Fig. 2 ist der Prüfkörper 1 im Querschnitt dargestellt und auf der Oberfläche 2 und einer Seitenfläche 102 mit einer nicht ebenen Kontur versehen. Bei seitlicher Bewegung der Rißsensoren 5 in Pfeilrichtung B bleibt deren Abstand d von der Oberfläche 2 konstant, da in einem Abstand e über der Oberfläche 2 die Führungsschiene 7 durch die Hubgetriebe 9 so verformt wird, daß sie weitgehend die Kontur der Oberfläche 2 des Prüfkörpers 1 annimmt. Zweckmäßigerweise wird die Führungsschiene 7 so dimensioniert, daß die Verformung im elastischen Bereich stattfindet.

Die der Oberfläche 2 nachgeformte Kontur der Führungsschiene 7 hat die Form eines mehrfach statisch unbestimmten Biegebalkens. Diese Kontur stimmt weit besser mit der Kontur der Oberfläche 2 überein, als wenn über den gesamten Bereich der Hin- und Herbewegung eines Rißsensors 5 nur eine Bewegung längs einer geraden, auf einen Mittelwert eingestellten Linie durchgeführt würde. Je genauer die Oberfläche 2 nachgeformt werden soll, desto mehr Lagerstellen 8 sind für die Führungsschiene 7 erforderlich. Die Anzahl der Lagerstellen 8 und die Anzahl der Riß- oder Abstandsensoren 5 kann unabhängig voneinander sein.

Durch entsprechende, seitlich angeordnete Systeme ist es auch möglich, die seitliche Oberflächenkontur 102 in einem Abstand e mit Hilfe einer weiteren Führungsschiene 107 nachzuformen, indem diese, wie durch die Pfeile C dargestellt ist (Fig. 2), mittels entsprechender Systeme der seitlichen Oberfläche angepaßt wird.

Gemäß Fig. 3 ist der Antriebsbalken 15 im Gehäuse 4 gelagert und nur in Pfeilrichtung $B_1$ beweg- bar. Das zur Bewegung erforderliche Antriebssystem ist hier als Resonanzsystem ausgeführt, das im wesentlichen aus einem Torsionsfederstab 19 und der Gesamtmasse des sich hin- und herbewegenden Anteiles der Oberflächenprüfeinrichtung besteht. Die vom Torsionsfederstab 19 erzeugten Momente werden mit Hilfe eines Schwingarmes 20 in Längskräfte umgeformt, die über ein biegbares Kupplungsorgan 21 den Antriebsbalken 15 bewegen.

Fig. 4 zeigt das Antriebssystem in Richtung eines Pfeils Z der Fig. 3. Der als Federelement für das schwingungsfähige System dienende Torsionsfederstab 19 ist an seinem oberen Ende fest im Gehäuse 4 eingespannt und am unteren Ende über ein Lager 22 drehbar im Gehäuse 4 gelagert. Der Schwingarm 20 ist fest mit dem Torsionsfederstab 19 verbunden und kann gemeinsam mit dem unteren Ende des Torsionsfederstabes 19 eine schwingende Bewegung ausführen. Diese schwingende Bewegung wird über das Kupplungsorgan 21 in den Antriebsbalken 15 geleitet, der seinerseits, wie in Fig. 3 zu erkennen ist, über die Blattfedern 14 und die Sensorhalter 12 die Sensoren 5 und 6 bewegt.

Zur Erregung des schwingungsfähigen Systems bei oder in der Nähe seiner Eigenfrequenz dient beispielsweise ein Fliehkrafterreger 23, der über eine Gelenkwelle 24 von einem Motor 25 mit regelbarer Drehzahl angetrieben wird. Die Erregung kann auch durch andere Systeme, z.B. ein Luftimpulssystem oder einen Kurbelantrieb, erfolgen, der beim Anlauf über eine Rutschkupplung arbeitet. Weitere Einzelheiten des schwingungsfähigen Antriebssystems sind in einer früheren Anmeldung desselben Anmelders beschrieben (vgl. DE OS 35 24 106.3 v. 5. Juli 1986, EP-86108026.5 v. 12. Juni 1986 veröffentlicht am 7.1.1987 als EP-A-0 207 338).

Bedingt durch das Resonanzsystem kann der Antrieb wesentlich kleiner ausgeführt werden als ein direkter mechanischer Antrieb. Bei dem Resonanzsystem muß nur ein kleiner Erreger angetrieben werden, der die Dämpfungs- und Reibungsverluste ausgleicht.

Um die Dämpfungs- und Reibungsverluste klein zu halten, wird vorgeschlagen, bei den Gleitstücken 11 und bei der Lagerung des Antriebsbalkens 15 im Gehäuse 4 pneumatische oder hydrostatische Lager zu verwenden, die entweder vorgespannt oder geschlossen sein können.

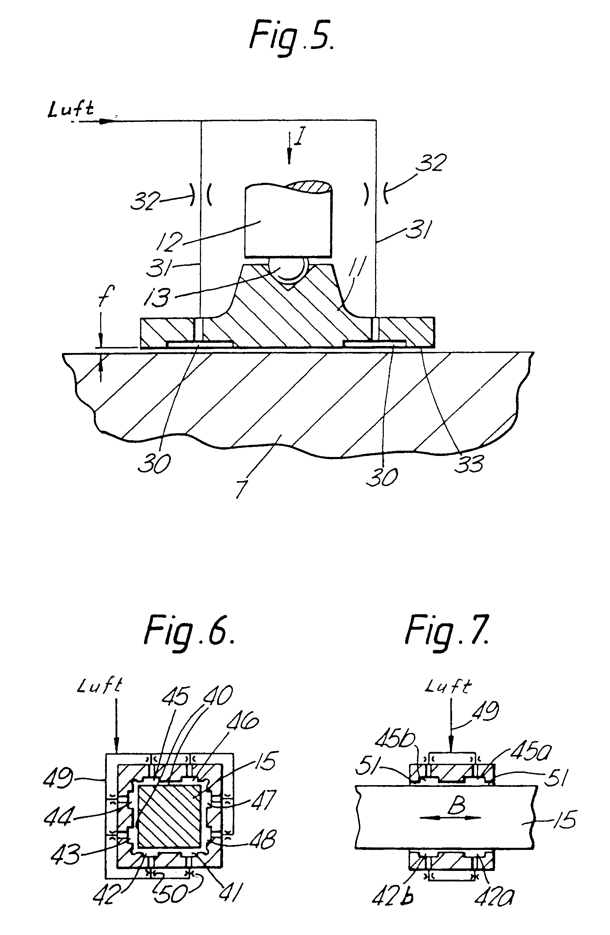

Fig. 5 zeigt ein pneumatisches Stützquellenlager für das Gleitstück 11. Hierbei sind in das Gleitstück 11 mehrere Lufttaschen 30 eingearbeitet, die auf dem Umfang verteilt sind. In jede dieser Lufttaschen 30 wird über Leitungen 31 und gegebenenfalls Drosseln 32 Luft eingeblasen. Die Luft hebt das Gleitstück 11 gegen die Kraft l, die von den Balttfedern 14 erzeugt wird, an. Dabei entsteht ein Spalt f, über den die Luft abfließt. Die Drosseln 32 und der Spalt f zwischen Gleitstück 11 und Führungsschiene 7 bilden dabei eine Art Brückenschaltung, die den Druck in den Taschen 30 selbsttätig regelt. Anstelle der Drosseln 32 können die Leitungen 31 so dünn ausgeführt werden, daß sie die gewünschte Drosselwirkung haben.

Damit sich das Gleitstück 11 jeder Oberflächenneigung der Führungsschiene 7 anpassen kann, ist es zweckmäßig, zwischen Sensorhalter 12 und Gleitstück 11 das Gelenk 13 (Fig. 1,2) anzuordnen.

Auch die Lagerung für den Antriebsbalken 15, der z.B. einen quadratischen Querschnitt und vier Lagerflächen 40 aufweist, kann zweckmäßigerweise als Luftlager ausgeführt werden. Fig. 6 und 7 zeigen eine entsprechende Anordnung. Bei der hier dargestellten Lagerung handelt es sich nicht um eine Stützquellenlagerung, die durch ein federndes System vorgespannt wird, sondern um eine pneumostatische Lagerung, bei der über jeder Lagerfläche 40 neben- und hintereinander Lufttaschen 41 bis 48 angeordnet sind. Bei diesem System wird der Antriebsbalken 15 mit seinen Lagerflächen 40 zwischen den jeweils gegenüberliegenden Taschen, z.B. 44 und 47 oder $42_b$ und $45_b$, schwimmend geführt. Über Drosseln 50 und die Leitungen 49 werden die Lufttaschen 41 bis 48 mit Druckluft versorgt. Die Drosseln 50 und Spalte 51 bilden, wie anhand Fig. 5 beschrieben, wieder eine Art Brückenschaltung, die sich selbst zentriert. Durch die hier dargestellte Lagerung wird der Antriebsbalken 15 in fünf der sechs möglichen Freiheitsgrade festgelegt. Das System zur Bewegung der Sensoren kann sich nur in Richtung der Pfeile B (Fig. 7) bzw. $B_1$ (Fig. 3) bewegen.

Anstelle der pneumatischen Lager nach Fig. 5 bis 7 können auch entsprechende hydraulische Lager verwendet werden, die mit einer Druckflüssigkeit arbeiten. Außerdem ist es möglich, andere Abstützeinrichtungen oder Führungen, z.B. Rollenführungen, zu verwenden.

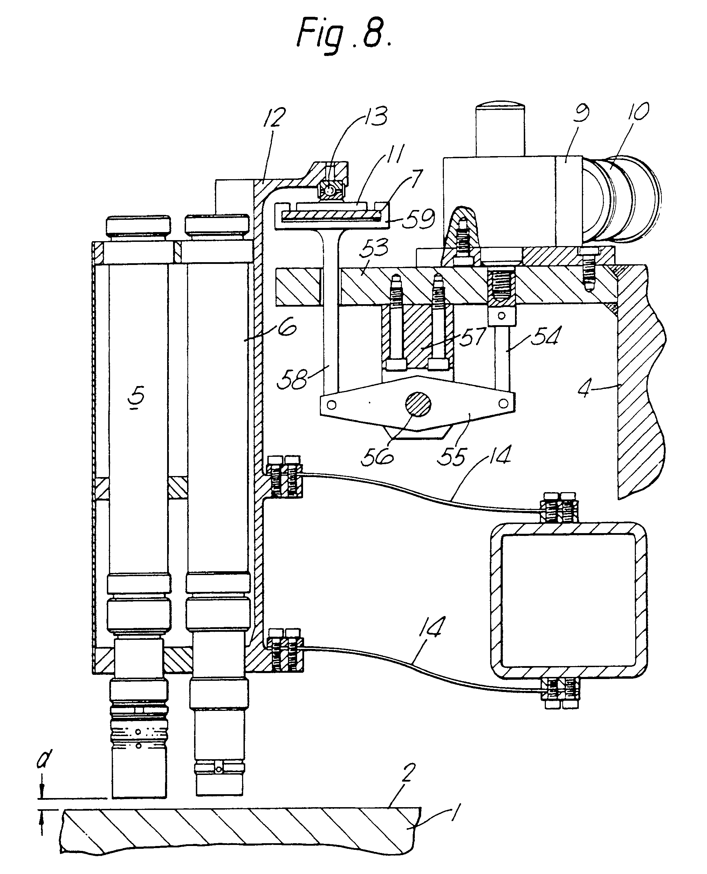

Eine bevorzugte Ausführungsform der Oberflächenprüfeinrichtung, insbesondere der Lagerung der Führungsschiene 7, ist in Fig. 8 im Querschnitt dargestellt. Danach weist das Gehäuse 4 einen quer über den Prüfkörper 1 erstreckten Tragarm 53 auf, auf dessen Oberseite die beispeilsweise als Schneckengetriebe ausgebildeten Hubgetriebe 9 und die Antriebseinrichtungen 10 montiert sind.

Jedes Hubgetriebe 9 wirkt auf eine den Tragarm 53 durchragende und in diesem verschiebbar gelagerte Stange 54 ein, deren freies Ende an einem Arm eines Hebels 55 schwenkbar angelenkt ist. Der Hebel 55 ist in seiner Mitte auf einem Schwenkzapfen 56 schwenkbar gelagert, der an einem an der Unterseite des Tragarms 53 aufgehängten Haltearm 57 befestigt ist. Der andere Arm des Hebels 55 ist an einer Stange 58 schwenkbar angelenkt, die zur Stange 54 parallel angeordnet und in einer Bohrung des Tragarms 53 verschiebbar gelagert ist. An dem auf der Oberseite des Tragarms 53 herausragenden Ende der Stange 58 ist ein U-förmiger Haltebügel 59 befestigt, der die Führungsschiene 7 klammerartig umgreift und einspannt. In Längsrichtung der Führungsschiene 7 ist eine Vielzahl solcher Haltebügel 59 mit den Teilen 9,10 und 54 bis 58 vorgesehen, und jeder Haltebügel 59 bildet eine der in Fig. 1 und 2 dargestellten Lagerstellen 8. Jede Antriebseinrichtung 10 ist dabei entsprechend Fig. 1 mit einem Regelverstärker 17 verbunden. Die übrigen Teile sind mit den aus Fig. 1 bis 3 ersichtlichen Bezugszeichen versehen.

Beim Vorliegen einer Regelabweichung zwischen dem jeweiligen Ist-und Sollwert irgendeines der Abstandsensoren 6 werden der Antriebseinrichtung 10 entsprechende Stellsignale zugeführt. Hierdurch wird die Stange 54 in Richtung der Oberfläche 2 des Prüfkörpers 1 vor- oder zurückbewegt, während gleichzeitig die Stange 58 entgegengesetzt zurück- oder vorbewegt wird. Die Kombination der Teile 54, 55 und 58 stellt dabei lediglich einen Umlenkmechanismus dar. Durch die Bewegung der Stange 58 und des daran befestigten Haltebügels 59 wird der an diesem befestigte Abschnitt der Führungsschiene 7 ebenfalls entsprechend relativ zur Oberfläche 2 bewegt und daher derart verstellt, daß sich die erwünschte Abstandsänderung ergibt. Da die Führungsschiene 7 von den Haltebügeln 59 klammerartig gehalten ist, machen ihre von diesen gehaltenen Abschnitte jede Bewegung der Stange 58 in den beiden möglichen, entgegengesetzten Richtungen unabhängig davon mit, welche Positionen die jeweils benachbarten Haltebügel 59 bzw. Führungsschienenabschnitte einnehmen.

Die Erfindung ist nicht auf das beschriebene Ausführungsbeispiel beschränkt, das sich auf vielfache Weise abwandeln läßt. Dies gilt insbesondere für die dargestellten Antriebs- und Regelvorrichtungen, aber auch z.B. für den die hin- und hergehende Bewegung des Sensorhalters 12 bewirkende Vorrichtung oder die Art der verwendeten Sensoren 5 und 6. Die in Fig. 8 dargestellte Ausführungsform könnte dadurch abgewandelt werden, daß die Führungsschiene mit Hilfe eines Vorspannmechanismus in Richtung des Tragarms 53 vorgespannt wird. In diesem Fall würde der aus den Teilen 54, 55 und 58 gebildete Umlenkmechanismus nur auf Druck belastet, was eine einfache spielfreie Auf- und Abbewegung der Führungsschiene 7 ermöglicht. Wird anstelle des quadratischen Antriebsbalkens 15 ein Balken mit einem kreisrunden Querschnitt gewählt, wird zweckmäßig noch eine besondere Drehsicherung für den Antriebsbalken vorgesehen.

## Ansprüche

1. Oberflächenprüfeinrichtung mit einem einen Oberflächensensor tragenden Sensorhalter (12) und einer diesen abstützenden Führungsschiene (7, 107), mittels derer der Sensorhalter (12) längs einer vorgewählten Bewegungsbahn über einer zu prüfenden Oberfläche (2) bewegbar ist, dadurch gekennzeichnet, daß die Fürhrungsschiene (7, 107) eine entsprechend der Kontur der zu prüfenden Oberfläche (2) verformbare Führrungsschiene (7, 107) ist, deren Abstand von der Oberfläche (2) an mehreren Stellen mittels je einer Einstellvorrichtung (6, 9, 10, 16-18), der ein am Sensorhalter (12) vorgesehener Abstandsensor (6) zugeordnet ist, auf einem vorgewählten Wert gehalten wird.

2. Oberflächenprüfeinrichtung nach Anspruch 1, dadurch gekennzeichnet, daß die Führungsschiene (7, 107) aus einem biegeelastischen Balken besteht.

3. Oberflächenprüfeinrichtung nach Anspruch 1 oder 2, dadurch gekennzeichnet, daß jede Einstellvorrichtung ein steuerbares, an der Führungsschiene (7, 107) befestigtes Stellglied (9, 10) aufweist.

4. Oberflächenprüfeinrichtung nach Anspruch 3, dadurch gekennzeichnet, daß jedes Stellglied (9, 10) zusammen mit dem Abstandsensor (6) als Istwertgeber und einem Sollwertgeber (18) einen Regelkreis zur Einstellung des Abstands bildet.

5. Oberflächenprüfeinrichtung nach einem der Ansprüche 1 bis 4, dadurch gekennzeichnet, daß der Sensorhalter (12) mittels einer vorgespannten Abstützeinrichtung auf der Führungsschiene (7, 107) abgestützt ist.

6. Oberflächenprüfeinrichtung nach Anspruch 5, dadurch gekennzeichnet, daß die Abstützeinrichtung zwei Blattfedern (14) aufweist, die einerseits an einem parallel zur Bewegungsbahn bewegbaren Antriebsbalken (15), andererseits am Sensorhalter (12) befestigt sind und ein Parallelführungssystem bilden.

7. Oberflächenprüfeinrichtung nach Anspruch 5 oder 6, dadurch gekennzeichnet, daß die Abstützeinrichtung ein auf der Führungsschiene (7, 107) abgestütztes Gleitstück (11) und ein zwischen diesem und dem Sensorhalter (12) angeordnetes Gelenk (13) aufweist.

8. Oberflächenprüfeinrichtung nach einem der Ansprüche 1 bis 7, dadurch gekennzeichnet, daß zur Bewegung des Sensorhalters (12) ein schwingungsfähiges System vorgesehen ist, das mittels eines Erregersystems (23, 24, 25) in oder in der Nähe seiner Eigenfrequenz betrieben wird.

9. Oberflächenprüfeinrichtung nach einem der Ansprüche 1 bis 8, dadurch gekennzeichnet, daß das schwingungsfähige System und/oder das Gleitstück (11) mit pneumatischen oder hydraulischen Stützquellenlagern (30 bis 32, 41 bis 51) geführt ist.

10. Oberflächenprüfeinrichtung nach einem der Ansprüche 1 bis 9, dadurch gekennzeichnet, daß auf der Führungsschiene (7, 107) eine Mehrzahl von Sensorhaltern (12) abgestützt ist, die je einen Oberflächen- und Abstandsensor (5, 6) tragen

11. Oberflächenprüfeinrichtung nach Anspruch 10, dadurch gekennzeichnet, daß die Sensorhalter (12) mit einem gemeinsamen Antriebsbalken (15) gekoppelt sind.

## Claims

1. A surface-testing device with a surface sensor held by a sensor holder (12), the latter supported by a guide rail (7, 107) by means of which the sensor holder (12) is displaceable along a preselected path of movement across a surface (2) to be tested, characterised in that the guide rail (7, 107) is deformable in conformity with the contour of the surface (2) to be tested, the distance between said guide rail and the surface (2) being kept to a preselected value at several points by an adjuster device (6, 9, 10, 16-18) provided at each such point, each adjuster device (6, 9, 10, 16-18) having associated therewith a distance sensor (6) provided on the sensor holder (12).

2. A surface-testing device according to Claim 1, characterised in that the guide rail (7, 107) consists of a flexible elastic beam.

3. A surface-testing device according to Claim 1 or 2, characterised in that each adjuster device has a controllable actuator member (9, 10) attached to the guide rail (7, 107).

4. A surface-testing device according to Claim 3, characterised in that each actuator member (9, 10), together with the distance sensor (6) acting as an actual-value emitter, and with an index-value emitter (18), forms a control circuit in order to control the distance.

5. A surface-testing device according to one of Claims 1 to 4, characterised in that the sensor holder (12) is supported on the guide rail (7, 107) by means of a prestressed support means.

6. A surface-testing device according to Claim 5, characterised in that the support means has two leaf springs (14) attached at one end to a drive beam (15) movable parallel to the path of movement, and at the other end to the sensor holder (12), forming a parallel guide system.

7. A surface-testing device according to Claim 5 or 6, characterised in that the support device has a slider (11) supported on the guide rail (7, 107) and an articulation (13) located between said slider (11) and the sensor holder (12).

8. A surface-testing device according to one of Claims 1 to 7, characterised in that, in order to move the sensor holder (12), there is provided an oscillatory system which is actuated at or close to its resonant frequency by an energising system (23, 24, 25).

9. A surface-testing device according to one of Claims 1 to 8, characterised in that the oscillatory system and/or the slider (11) are guided by pneumatic or hydraulic support bearings (30 to 32, 41 to 51).

10. A surface-testing device according to one of Claims 1 to 9, characterised in that there is supported on the guide rail (7, 107) a plurality of sensor holders (12), each of which carries a surface and distance sensor (5, 6).

11. A surface-testing device according to Claim 10, characterised in that the sensor holders (12) are coupled to a common drive beam (15).

## Revendications

1. Dispositif d'examen de surface comprenant un porte-détecteur (12) avec un détecteur de surface et un rail de guidage (7, 107) soutenant celui-ci et à l'aide duquel le porte-détecteur (12) peut être déplacé le long d'une trajectoire présélectionnée sur une surface (2) à contrôler, **caractérisé en ce** que le rail de guidage (7, 107) est un rail de guidage (7, 107) déformable conformément au contour de la surface (2) à contrôler et dont la distance par rapport à ladite surface (2) est maintenue à plusieurs endroits, au moyen de respectivement un dispositif de réglage (6, 9, 10, 16 à 18) auquel est associé un détecteur de distance (6) prévu sur le porte-détecteur (12), à une valeur présélectionnée.

2. Dispositif d'examen de surface selon la revendication 1, caractérisé en ce que le rail de guidage (7, 107) est constitué par une poutre flexible.

3. Dispositif d'examen de surface selon l'une des revendications 1 ou 2, caractérisé en ce que chaque dispositif de réglage comprend un organe de réglage (9, 10) commandable fixé sur le rail de guidage (7, 107).

4. Dispositif d'examen de surface selon la revendication 3, caractérisé en ce que chaque organe de réglage (9, 10) forme, conjointement avec le détecteur de distance (6) en tant que capteur de valeur effective et un ajusteur de valeur de consigne (18), un circuit de réglage pour le réglage de la distance.

5. Dispositif d'examen de surface selon l'une des revendications 1 à 4, caractérisé en ce que le porte-détecteur (12) est maintenu sur le rail de guidage (7, 107) au moyen d'un dispositif de support précontraint.

6. Dispositif d'examen de surface selon la revendication 5, caractérisé en ce que le dispositif de support comprend deux ressorts à lames (14) qui sont fixés d'un côté sur une poutre d'entraînement (15) déplaçable parallèlement à la trajectoire et de l'autre côté sur le porte-détecteur (12) et constituent un système de parallélogramme.

7. Dispositif d'examen de surface selon l'une des revendications 5 ou 6, caractérisé en ce que le dispositif de support comprend une coulisse (11) prenant appui sur le rail de guidage (7, 107) et une articulation (13) disposée entre celle-ci et le porte-détecteur (12).

8. Dispositif d'examen de surface selon l'une des revendications 1 à 7, caractérisé en ce qu'il comprend pour le mouvement du porte-détecteur (12) un système oscillant qui, au moyen d'un système d'excitation (23, 24, 25), fonctionne à sa fréquence de résonance ou à proximité de celle-ci.

9. Dispositif d'examen de surface selon l'une des revendications 1 à 8, caractérisé en ci que le système oscillant et/ou la coulisse (11) est guidé à l'aide de paliers de sources d'appui pneumatiques ou hydrauliques (30 à 32, 41 à 51).

10. Dispositif d'examen de surface selon l'une des revendications 1 à 9, caractérisé en ce que le rail de guidage (7, 107) supporte une pluralité de porte-détecteurs (12) équipés chacun d'un détecteur de surface et de distance (5, 6).

11. Dispositif d'examen de surface selon la revendication 10, caractérisé en ce que les porte-détecteurs (12) sont couplés avec une poutre d'entraînement commune (15).

# Fig .1.

# Fig .2.

*Fig.3.*

*Fig.4.*

# Fig.5.

Luft

# Fig.6.

Luft

# Fig.7.

Luft

# Fig.8.